# EUROPEAN PATENT SPECIFICATION

(11) **EP 0 776 604 B1**
(45) Date of publication and mention of the grant of the patent: **23.01.2002**
(21) Application number: 96203160.5
(22) Date of filing: 12.11.1996
(51) Int. Cl.: A21D 2/16, A21D 15/02

(54) **Microwavable crispy bread-rolls**
Mikrowellen erhitzbare knusperige Brötchen
Petits pains croustillants chauffables au four à micro-ondes

(30) Priority: 01.12.1995 EP 95203310
(43) Date of publication of application: 04.06.1997
(73) Proprietor: UNILEVER N.V., 3000 DK Rotterdam (NL); UNILEVER PLC, London EC4P 4BQ (GB)
(72) Inventor: Boode, Boissevain, Karin, Rochester, NY 14611 (US); Sanders, Johannes Cornelis, 3133 AT Vlaardingen (NL); Schreurs, Ruud, 5503 LN Veldhoven (NL)
(74) Representative: Sikken, Antonius H. J. M.

(56) References cited:
- US-A- 4 335 157
- US-A- 5 145 699

## Description

Many bread-dough compositions are known in the prior art. Conventional ingredients for these doughs are: flour, yeast, salt, fat, emulsifier, sugar and water, which can be present in various amounts, depending among other on the type of dough desired. Some of these known compositions are useful for the preparation of bread-rolls, other compositions are used for the preparation of microwavable bread. However none of the known compositions could be used for the preparation of a microwavable crispy bread roll with an improved soft crumb and still having a short bite after microwaving. We found a solution for above problem. So we found a dough-composition from which baked bread-rolls could be made, that upon freezing and reheating by microwaving displayed an excellent crispy character, a soft crumb and had a short bite.

Our invention can be defined as a microwavable bread roll, provided with a susceptor, suitable for the preparation of a crispy bread-roll with improved crumb-softening properties and with a short bite, wherein the bread-roll is mode by baking of a premoulded portion of a dough, which dough comprises:
100 wt % of a flour and on basis of this flour;
2-10 wt % of yeast;
0-4 wt % of salt;
0-5 wt % of fat;
0,1-20 wt %, preferably 0.2-3 wt % of bread - improver, preferably comprising emulsifier(s), anti-oxidants, enzymes, fats, etc.
0-5 wt %, preferably 0.1-2 wt % of a sugar
0.05-2 wt % of a monoglyceride-composition with an iodine value (IV) > 20
45-65 wt % of water

It was found, that the amount of unsaturates in the monoglycerides had an impact on the performance of the bread-rolls after microwaving so we prefer to apply monoglycerides, comprising so much of unsaturated fatty acid moieties, that its IV > 20, preferably > 30, most preferably > 40.

Although the use of mono- and diglycerides in shortenings is known from US 4,335,157 nothing can be derived from this document about the specific use of our unsaturated monoglycerides in doughs that need to be reheated by microwaving.

The amounts of yeast, fat and water that we preferably apply in our dough-compositions are:
3-8 wt % of yeast
0.5-3 wt % of fat
50-60 wt % of water.

Emulsifiers that can be applied advantageously in the bread improver component of our doughs are in particular selected from the group consisting of lecithin (both untreated and enzymically treated), sodium or calcium stearoyl lactylate (=SSL or CSL) and Data-esters (=diacetyl tartaric acid fatty acid esters). Anti-oxidants that are very suitable in our composition are e.g. ascorbic acid, ascorbic acid fatty acid esters, such as ascorbyl palmitate, while also KBr03 can be applied. Enzymes that can be present are preferably selected from the group consisting of glucose oxidase, glucose peroxidase, amylase, xylanase and lipoxy genase. Combinations of above ingredients can have synergistic effects on the dough compositions and are therefore very useful. The bread-improver component of our dough can also contain fillers, such as inorganic foodgrade filler materials.

The reheating of our bread rolls in a microwave oven is suitably performed by applying a susceptor around, our bread rolls. As susceptor any prior art susceptor suitable for this purpose could be applied. Examples of suitable susceptors are disclosed in: GB 2.280.342, EP 563.442 or GB 2.250.408.

The bread-rolls, suitable for reheating in a susceptor by microwaving, which are made by baking of a premoulded portion of a dough with the composition as mentioned can be made by baking in any conventional oven, using standard conditions.

Although it is possible to perform the reheating of our bread-rolls in the absence of a susceptor, in which case a combi-oven has to be applied, we found that in order to fulfil the aims of the invention the best it is most suitable, when the bread-rolls mentioned above are provided with a susceptor.

According to a further embodiment of the invention the bread-rolls can be baked, frozen to -5 to -20°C, provided with a hole, which hole can be filled with a savoury or sweet filling, whereupon the filled bread-rolls are put into a susceptor and the composite of susceptor and bread-roll is stored at -5 to -20°C. It is however also possible to fill the bread-rolls without first freezing them.

According to a last embodiment the use of a dough for the production of a microwavable bread-roll, wherein a bread-roll, made from a dough with the composition mentioned above is used for the improvement of the crumb-softening properties of the microwaved bread-roll and to obtain a short-bite for the microwaved bread-roll, is also part of our new invention.

### Example:

1. A dough was made from the following ingredients in the amounts indicated:

| | |
|---|---|
| flour: Edelweiss® | 2000 g |
| Yeast | 140 g |
| Salt | 40 g |
| fat: Biskien®-zacht bread improver, comprising: | 20 g |
| lecithin, xylanase, ascorbic acid and amylase | 20 g |
| monoglyceride 2235 (Quest) IV=40 | 6 g |
| water | 1120 g |

The dough was prepared by mixing of all dry components and the water using a Diosna-mixer (3 min, low speed)
Thereafter kneading was continued during 3.5 min at high speed.
The dough was held at 27°C for 12 min (45% rel hum.).
The dough was fermented for 1.1 hrs at 30 °C
(rel. hum 75 %)

60 g of the dough were moulded into a bread-roll. The bread-roll was baked (20 min. at 235°C), provided with a susceptor and the composite was frozen (to -10°C).

After storage for 14 days at -10°C the bread-roll in susceptor was put subjected to microwaving in a Brother-oven for 45 sec. at 1700 Watt.

The microwaved bread-roll was crispy and had a short-bite and an excellent crumb softness.

### Example:

2. A dough was made from the following ingredients in the amounts indicated:

| | |
|---|---|
| flour: Kolibri® | 2000 g |
| Yeast | 140 g |
| Salt | 40 g |
| fat: Biskien zacht® bread improver, comprising: | 20 g |
| lecithin, xylanase, ascorbic acid and amylase | 20 g |
| monoglyceride 2235 (Quest) IV=40 | 6 g |
| water | 1120 g |

The dough was prepared by mixing of all dry components and the water using a Diosna-mixer (3 min, low speed)
Thereafter kneading was continued during 6 min at high speed.
The dough was held at 27°C for 12 min (45% rel hum.).
The dough was fermented for 2 hrs at 30 °C
(rel. hum 75 %)

60 g of the dough were moulded into a bread-roll. The bread-roll was baked (20 min. at 235°C), provided with a susceptor and the composite was frozen (to -10°C).

After storage for 14 days at -10°C the bread-roll in susceptor was put subjected to microwaving in a Brother - oven for 45 sec. at 1700 Watt or in a Whirlpool combi-oven 650 Watt and 175 °C - 200 °C without susceptor.

The microwaved bread-roll was crispy and had a short-bite and an excellent crumb softness.

### Example

| | |
|---|---|
| 3 flour: Ibis® | 2000 g |
| Yeast | 80 g |
| Salt | 40 g |
| fat: Biskien zacht® bread improver, comprising: | 40 g |
| lecithin, xylanase, ascorbic acid and amylase | 40 g |
| monoglyceride 2235 (Quest) IV=40 | 6 g |
| water | 1260 g |

Dough preparation, proofing etc. as described for example 1. Two products were reheated in the susceptor sleeve after 3 weeks storage in a Panasonic microwave oven at 650 W for 2'15".

## Claims

1. Microwavable bread-roll, provided with a susceptor, suitable for the production of a crispy bread-roll with improved crumb-softening properties and with a short-bite, wherein the bread-roll is made by baking of a premoulded portion of a dough, comprising
100 wt % of a flour and on basis of this flour;
2-10 wt % of yeast;
0-4 wt % of salt;
0-5 wt % of fat;
0,1-20 wt %, preferably 0.2-3 wt % of bread - improver, preferably comprising emulsifier(s), anti-oxidants, enzymes, fats
0-5 wt %, preferably 0.1-2 wt % of a sugar
0.05-2 wt % of a monoglyceride-composition with an iodine value > 20
45-65 wt % of water

2. Microwavable bread-roll according to claim 1, wherein the monglyceride-composition contains so much unsaturated fatty acid moieties, that its IV > 30, preferably > 40.

3. Microwavable bread-roll according to claims 1 or 2, wherein the dough comprises: (on flour)
3-8 wt % of yeast
0.5-3 wt % of fat
50-60 wt % of water.

4. Use of a dough for the production of a microwavable bread-roll, wherein a bread-roll, made from a dough with the composition mentioned in claim 1-3 is used for the improvement of the crumb-softening properties of the microwaved bread-roll and to obtain a short-bite for the microwaved bread-roll.

## Patentansprüche

1. Mikrowellen-erhitzbares Brötchen, versehen mit einer Abdeckung, geeignet für die Erzeugung eines knusprigen Brötchens mit verbesserten Krümelerweichungseigenschaften und mit gutem Biß, worin das Brötchen durch Backen eines vorgeformten Teils eines Teigs erzeugt wird, umfassend
100 Gew.-% Mehl und auf Basis dieses Mehls;
2 bis 10 Gew.-% Hefe;
0 bis 4 Gew.-% Salz;
0 bis 5 Gew.-% Fett;
0,1 bis 20 Gew.-%, bevorzugt 0,2 bis 3 Gew.-%, Brotverbesserer, bevorzugt umfassend Emulgator(en), Antioxidanzien, Enzyme, Fette;
0 bis 5 Gew.-%, vorzugsweise 0,1 bis 2 Gew.-%, Zucker;
0,05 bis 2 Gew.-% Monoglyceridzusammensetzung mit einer Jodzahl > 20 und
45-65 Gew.-% Wasser.

2. Mikrowellen-erhitzbares Brötchen nach Anspruch 1, worin die Monoglyceridzusammensetzung so viel ungesättigte Fettsäure-Reste enthält, daß die IZ > 30, bevorzugt > 40, beträgt.

3. Mikrowellen-erhitzbares Brötchen nach Anspruch 1 oder 2, worin der Teig umfaßt: (bezogen auf Mehl)
3 bis 8 Gew.-% Hefe;
0,5 bis 3 Gew.-% Fett und
50 bis 60 Gew.-% Wasser.

4. Verwendung eines Teigs zur Erzeugung eines Mikrowellenerhitzbaren Brötchens, worin ein Brötchen aus einem Teig mit der in Anspruch 1 bis 3 beschriebenen Zusammensetzung eingesetzt wird, zur Verbesserung der Krümelerweichungseigenschaften des Mikrowellen-erhitzten Brötchens und um einen guten Biß für das Mikrowellen-erhitzte Brötchen zu erhalten.

## Revendications

1. Petit pain chauffable au four à micro-ondes, muni d'une barquette de mise en forme appropriée pour la production d'un petit pain croustillant ayant des propriétés d'attendrissement de la croûte et ayant un caractère craquant, dans lequel le petit pain est fabriqué en cuisant au four une portion préalablement moulée d'une pâte comprenant :
• 100 % en poids d'une farine, et sur la base de cette farine ;
• 2 - 10 % en poids de levure ;
• 0 - 4 % en poids de sel ;
• 0 - 5 % en poids de graisse ;
• 0,1 - 20 % en poids, de préférence 0,2 - 3 % en poids d'améliorateurs de pain comprenant de préférence un (des) émulsifiant(s), des anti-oxydants, des enzymes, des graisses ;
• 0 - 5 % en poids, de préférence 0,1 - 2 % en poids d'un sucre ;
• 0,05 - 2 % en poids d'une composition de monoglycérides avec une valeur d'iode > 20 ;
• 45 - 65 % d'eau.

2. Petit pain chauffable au four à micro-ondes selon la revendication 1, dans lequel la composition de monoglycérides contient suffisamment de parties de molécules d'acide gras insaturé de telle sorte que son IV soit > 30, de préférence > 40.

3. Petit pain chauffable au four à micro-ondes selon les revendications 1 ou 2, dans lequel la pâte comprend (sur la base de la farine) :
• 3 - 8 % en poids de levure
• 0,5 - 3 % en poids de graisse
• 50 - 60 % en poids d'eau.

4. Utilisation d'une pâte pour la production d'un petit pain chauffable au four à micro-ondes, dans laquelle le petit pain fabriqué à partir d'une pâte contenant la composition mentionnée dans les revendications 1 à 3, qui est utilisée pour l'amélioration des propriétés d'attendrissement de la croûte du petit pain chauffable au four à micro-ondes et pour conférer un caractère craquant au petit pain chauffable au four à micro-ondes.
